# NEUE EUROPÄISCHE PATENTSCHRIFT

(11) **EP 2 045 393 B2**
(45) Veröffentlichungstag und Bekanntmachung des Hinweises auf die Entscheidung über den Einspruch: **20.11.2019**
(45) Hinweis auf die Patenterteilung: 09.01.2013
(21) Anmeldenummer: 07121006.6
(22) Anmeldetag: 19.11.2007
(51) Int. Cl.: D21H 19/80, D21H 19/82, D21H 27/18, D21H 27/28, B44C 5/04, B32B 27/04, B32B 27/10

(54) **Verfahren zum Herstellen einer abriebfesten Folie und abriebfeste Folie**
Method for manufacturing an abrasion resistant film and finishing film manufactured according to this method
Procédé de fabrication d'une feuille résistant à l'usure et feuille de finition fabriquée selon ce procédé

(30) Priorität: 04.10.2007 DE 102007047636
(43) Veröffentlichungstag der Anmeldung: 08.04.2009
(73) Patentinhaber: DAKOR Melamin Imprägnierungen GmbH, 72535 Heroldstatt (DE)
(72) Erfinder: Schweizer, Guido, 89188 Merklingen (DE); Barwich, Stefan, 89150 Laichingen (DE)
(74) Vertreter: Patent- und Rechtsanwälte Dr. Solf & Zapf

(56) Entgegenhaltungen:
- WO-A-00/41883
- WO-A-02/066265
- DE-C1- 19 508 797
- DE-C2- 2 920 304
- US-A- 5 456 949

## Beschreibung

Die vorliegende Erfindung betrifft ein Verfahren zum Herstellen einer abriebfesten Folie, insbesondere zur Herstellung von Laminat-Fußbodenmaterialien oder abriebfesten Möbeloberflächen, wobei in einer ersten Applikationsstufe ein Dekorpapier mit einer, ein erstes Kunstharz enthaltenden Imprägnierung versehen wird, wobei in einer zweiten Applikationsstufe auf das feuchte Imprägnat eine Schicht aufgebracht wird, die ein zweites Kunstharz und partikelförmiges abriebminderndes Material enthält, und wobei anschließend eine Wärmebehandlung erfolgt, welche eine Behandlungsstufe zur teilweisen Aushärtung der Kunstharze und zur teilweisen Entfernung der Feuchte aus dem feuchten beschichteten Imprägnat darstellt.

Des Weiteren betrifft die Erfindung eine abriebfeste Folie, insbesondere zur nachträglichen Klebeverbindung mit einem Träger zur Herstellung eines Laminates, bestehend aus einem Papier, insbesondere aus einem Dekorpapier, und aus einer darauf abgeschiedenen, aus einem ausgehärteten Kunstharz bestehenden Deckschicht.

Ein Verfahren der genannten Art ist aus der europäischen Patentschrift EP 1 068 394 B1 bekannt. Dieses Dokument bezieht sich auf ein Verfahren zum Imprägnieren von zum Herstellen hochabriebfester Laminat-Fußbodenmaterialien verwendeter Dekorpapiere, bei dem das Dekorpapier zunächst mit einem Aminoharz angefeuchtet und dadurch imprägniert wird, wobei die Menge des Harzes mittels Dosierwalzen geregelt wird, und wobei auf das angefeuchtete nasse Dekorpapier zusätzlich eine Schicht aus einem Aminoharz in spezieller Dispersion aufgedüst wird. Dabei beträgt die endgültige Flächenmasse - bezogen auf die Trockenmasse des Rohpapiers - 100 % bis 250 % und die Dispersion enthält partikelförmiges Abriebmaterial.

Als apparative Ausrüstung zur Realisierung des Verfahrens ist nach einem Imprägnierwerk ein Standardimprägnierkanal der Firma VITS angeordnet, der ein Einschubwerk aufweist, welches seinerseits aus einer Breitstreckwalze, einer Umlenkwalze, einem Düsenspalt mit Auffangwanne, einem Dosierwalzenpaar sowie Drahtrakelwalzen besteht. Die Verwendung einer derartigen Vorrichtung ist beispielsweise in dem Fachartikel "New Method for ARP-Manufacturing" von E. Klas und W. Müller in den Proceedings des 2000 TAPPI Plastic Laminats Symposiums, S. 157 - 165 dargestellt, wobei die Abkürzung "ARP", die in der Fachwelt in letzter Zeit auch als Attribut für die verwendete Düse benutzt wird, für "Abrasion Resistant Prepreg" steht. Unter Prepreg ist dabei wiederum ein vorbehandeltes Material zu verstehen, das imprägniert und im Sinne der eingangs genannten Wärmebehandlung einer Vortrocknung und teilweisen Aushärtung unterworfen wurde.

Das Produkt des bekannten Verfahrens, ein Dekorpapier mit einer gleichmäßigen, ein Aminoharz mit partikelförmigem Siliciumcarbid Korund oder Aluminiumoxid aufweisenden Beschichtung, die keine Zellulosederivate aufweist, kann - wie in der Patentschrift beschrieben - auf einer Kurztaktpresse bei 180 °C und Einhaltung einer Presszeit von 20 s auf eine HDF-Trägerplatte gepresst werden. Diese Platte wies nach einem Abriebtest entsprechend der Norm DIN EN 13329 einen Abriebwert von IP 12000 auf.

Der Abriebtest entsprechend der Norm DIN EN 13329 sieht dabei vor, dass zwei mit Schmirgelpapierstreifen bestückte Reibräder in eine spezielle Prüfeinrichtung eingesetzt werden, in deren Halter die Prüfkörper eingespannt sind, wo sie durch die Reibräder beaufschlagt werden. Nach jeweils 100 Umdrehungen werden die Prüfkörper auf Abrieb überprüft und nach jeweils 200 Umdrehungen wird das Schmirgelpapier durch neues ersetzt. Die Prüfung wird so lange fortgesetzt, bis der sogenannte Anfangsabriebpunkt (IP) erreicht ist. Darunter versteht man den Punkt, an dem unter den in der Norm detailliert definierten Bedingungen erstmalig ein klar erkennbarer Durchrieb eines im Prüfkörper vorhandenen Dekordruckes auftritt. Die zum Erreichen dieses Punktes benötigte Anzahl von Umdrehungen wird aufgezeichnet und stellt ein Maß für die Abriebfestigkeit dar. Die Beständigkeit gegen Abrieb eines Laminatbodens wird dann in Abriebklassen gemäß der nachstehenden Tabelle angegeben.

**Tabelle 1: Einteilung der Abriebklassen nach DIN EN 13329**

| Abriebklasse | Anforderung (IP-Wert) Anzahl Umdrehungen | Anwendung |
|---|---|---|
| AC1 | mindestens 900 | Schlafzimmer |
| AC2 | mindestens 1500 | Wohnzimmer |
| AC3 | mindestens 2000 | Diele Kleinbüro |
| AC4 | mindestens 4000 | Hotel |
| AC5 | mindestens 6000 | Kaufhaus |

Eine ähnliche Klassifizierung findet sich auch in der Norm DIN EN 438 "Dekorative Hochdruck-Schichtpressstoffplatten (HPL) - Platten auf Basis härtbarer Harze (Schichtpressstoffe) - Teil 2: Bestimmung der Eigenschaften".

Im Hinblick auf die Verarbeitbarkeit des bekannten Produktes in der Presse ist dabei Folgendes zu beachten: Bei der Wärmebehandlung, die nach dem Aufbringen der zusätzlichen Aminoharzschicht mit dem partikelförmigen abriebmindernden Material erfolgt, handelt es sich einerseits um einen Trocknungsvorgang, bei dem das in der eingesetzten Harzmasse enthaltene Wasser entfernt wird, und andererseits gleichzeitig um einen Vorgang, bei dem die Polymerbildung, insbesondere durch Lösungspolykondensation, abläuft. Bei dieser Wärmebehandlung müssen die technologischen Parameter derart gewählt werden, dass keine vollständige Vernetzung der Monomere erfolgt, damit sich das beschichtete Imprägnat noch unter Druck und Hitze verformen und pressen lässt.

Bei Phenolharzen, die wie die Aminoharze, insbesondere Melamin-Formaldehyd- (MF) und Melamin-Harnstoff (Urea)-Formaldehyd (MUF) -Harze, durch Polykondensation unter Einsatz von Formaldehyd als einer der Hauptreaktanden gewonnen werden, entsteht in der gestuft ablaufenden Reaktion zunächst Resol, welches in organischen Lösungsmitteln löslich ist und als Gießharz verarbeitet wird. Aus dem Resol entsteht in der Wärme Resitol, welches unter Druck und Hitze noch verform- und pressbar ist, und dann durch weitere Kondensation das sehr harte, vernetzte, chemikalienresistente, isolierende Material Resit bildet. Bei der Herstellung der Aminoplaste wird zwar nicht begrifflich, wie bei den Phenoplasten, ein Resol-, Resitol- und Resitzustand unterschieden, jedoch werden auch die Aminoplaste zunächst als oligomere Präpolymere synthetisiert, die für die endgültige Verwendung vernetzt werden. Der Vernetzungsgrad, den das Harz im Endprodukt gemäß dem Verfahren nach der EP 1 068 394 B1 aufweisen muss, entspricht somit dem Resitolzustand eines Phenoplasts. In dem vorstehend zitierten Artikel ist dieser Zustand mit "B-stage" gekennzeichnet worden.

Zur besseren Verarbeitbarkeit auf der Presse werden gemäß der EP 1 068 394 B1 außerdem auch Fließhilfsstoffe, wie Polyglykolether, Epsilon-Caprolactam oder Butandiol, eingesetzt, die auch eine bessere Verteilung des partikelförmigen Materials bewirken sollen.

Es sind außer diesen Folien, die im Ergebnis des bekannten Verfahrens entstehen und zur unmittelbaren Weiterverarbeitung auf einer Presse bestimmt sind, auch sogenannte Finishfolien bekannt, die in Rollenform geliefert werden und die später mit Hilfe eines Klebstoffs bzw. Leims mit geeigneten Trägern verbunden werden. Bei diesen Finishfolien, wie sie exemplarisch in der DE 198 46 659 A1 beschrieben sind, welche im Hinblick auf das Produkt mit den eingangs genannten Merkmalen als gattungsbildend betrachtet wird, findet man zur Erhöhung der Kratzfestigkeit der Oberfläche eine aus einem härtbaren Kunstharz, wie einem Acrylat, bestehende partikelfreie oder höchstens Nanopartikel - also Teilchen in molekularer Größenordnung - enthaltende Schicht, für deren Zusammensetzung in der DE 198 46 659 A1 spezielle Formulierungen und Modifikationen angegeben sind, welche durch eine Strahlungshärtung mit UV-Licht, polymerisiert werden. An einer solchen Schicht wird die Kratzfestigkeit, insbesondere nach der Norm DIN 53799, bestimmt.

Die WO02/066265 offenbart ein Verfahren zum Herstellen einer abriebfesten Folie, wobei in einer ersten Applikationsstufe ein Dekorpapier mit einer, ein erstes Kunstharz enthaltenden Imprägnierung versehen wird und dann in einer zweiten Applikationsstufe auf dieses feuchte Imprägnat eine Schicht aufgebracht wird, die ein zweites Kunstharz und partikelförmiges abriebminderndes Material enthält. Darauf folgt eine Wärmebehandlung zur teilweisen Trocknung des feuchten beschichteten Imprägnats, wobei es zur teilweisen Aushärtung der Kunstharze kommt. Nach dieser Wärmebehandlung erfolgt die Auftragung einer ein drittes Kunstharz enthaltenden Deckschicht. Darauf folgt eine weitere Wärmebehandlung zur vollständigen Trocknung und Aushärtung der Kunstharze.

Der vorliegenden Erfindung liegt die Aufgabe zugrunde, ein Verfahren der eingangs genannten Art zu schaffen, mit dem in technologisch wenig aufwändiger Weise eine abriebfeste Folie der eingangs genannten Art herstellbar ist, die hinsichtlich ihrer Gebrauchseigenschaften den Anforderungen der Norm DIN EN 13329 genügt. Des Weiteren umfasst die der vorliegenden Erfindung zugrunde liegende Aufgabe dabei auch, dass es bei einer erfindungsgemäßen Folie möglich sein soll, die Abriebfestigkeit auf einen gewünschten Wert variabel einstellen zu können.

Erfindungsgemäß wird dies im Hinblick auf das erfindungsgemäße Verfahren dadurch erreicht, dass in einer dritten Applikationsstufe, die sich an die, als eine erste Behandlungsstufe ablaufende Wärmebehandlung anschließt, die Auftragung einer, ein drittes Kunstharz enthaltenden Deckschicht erfolgt, und dass in einer abschließenden, zweiten Behandlungsstufe eine weitere Wärmebehandlung zur vollständigen Aushärtung der Kunstharze und Entfernung der Feuchte erfolgt, wobei die jeweiligen Verfahrensschritte wie in Anspruch 1 definiert ausgeführt werden.

Dieses Verfahren kann mit Vorteil, wie nachfolgend noch im Einzelnen dargestellt wird, im kontinuierlichen Betrieb in einer einzigen Durchlauf-Anlage realisiert werden.

Im Hinblick auf die erfindungsgemäße Folie wird dies dadurch erreicht, dass das Papier mit einer, ein erstes ausgehärtetes Kunstharz enthaltenden Imprägnierung versehen ist, dass auf dem Imprägnat unter der Deckschicht eine Schicht liegt, die ein zweites Kunstharz und partikelförmiges abriebminderndes Material enthält, und dass die aus einem ausgehärteten Kunstharz bestehende Deckschicht aus einem dritten Kunstharz gebildet ist, wobei die jeweiligen Kunstharze die in Anspruch 25 definierten Kunstharze sind.

Die erfindungsgemäße Folie ist vorteilhafterweise nach dem erfindungsgemäßen Verfahren herstellbar, wobei es möglich ist, in der zweiten Applikationsstufe der Anteil des partikelförmigen abriebmindernden Materials und/oder die Auftragsmenge in der Schicht in Abhängigkeit von der zu erzielenden Abriebfestigkeit der Folie einzustellen.

Weitere vorteilhafte Merkmale sind aus den Unteransprüchen und aus der nachfolgenden Beschreibung zu entnehmen. Anhand eines durch die beiliegende Zeichnung veranschaulichten Ausführungsbeispiels wird die Erfindung näher erläutert.

Dabei zeigen:
- Fig. 1: ein Fließdiagramm einer bevorzugten Ausführung eines erfindungs- gemäßen Verfahrens zum Herstellen einer für die Produktion von Lami- natmaterialien einsetzbaren abriebfesten Folie, insbesondere einer erfindungsgemäßen Folie, und
- Fig. 2: eine schematisierte Querschnittsdarstellung einer bevorzugten Ausfüh- rung einer erfindungsgemäßen Folie.

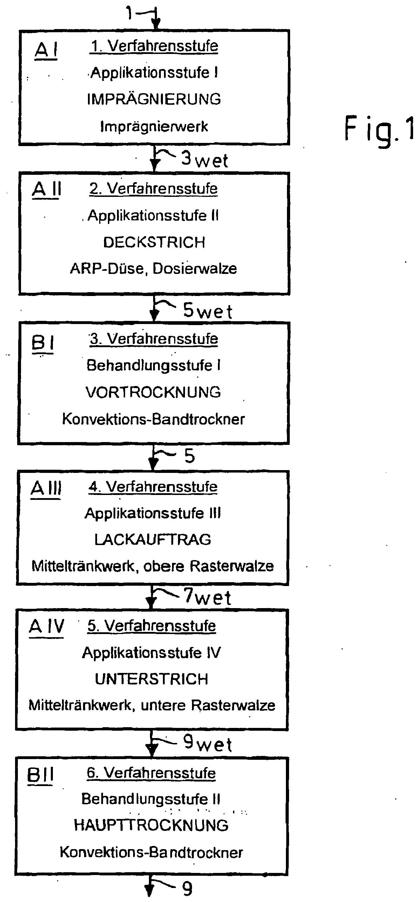

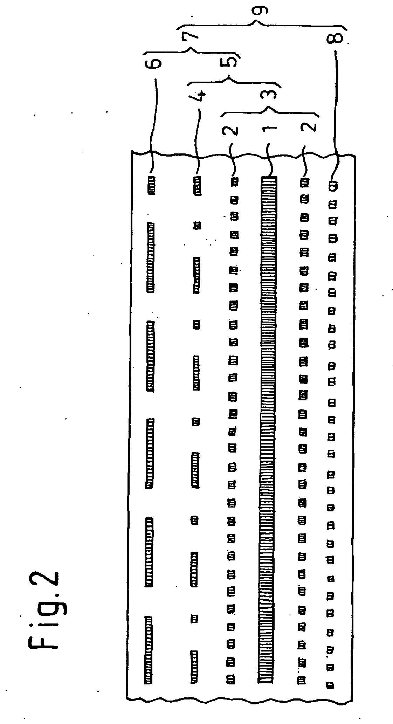

In den beiden Figuren der Zeichnung sind dieselben bzw. einander entsprechende Teile stets auch mit den gleichen Bezugszeichen versehen, so dass sie in der Regel auch jeweils nur einmal beschrieben werden. Was das erfindungsgemäße Verfahren (Fig. 1) betrifft, so liegen nach den einzelnen dargestellten Verfahrensstufen die applizierten Schichten noch nicht in der gleichen Form wie in der fertigen erfindungsgemäßen Folie (Fig. 2) vor. In diesen Fällen, in denen sich in der Regel noch jeweils in der Schicht ein sehr viel höherer Feuchtegehalt als im Endprodukt findet, enthalten die entsprechenden Bezugszeichen in Fig. 1 jeweils zusätzlich den Index "wet", um den vorhandenen Unterschied zum fertigen Produkt zu markieren. Die vorgetrockneten Schichten, die nicht in der Zeichnung erscheinen, sind jedoch im nachfolgenden Text vereinfachend jeweils mit dem gleichen Bezugszeichen gekennzeichnet wie die Schichten nach der Haupttrocknung.

Wie zunächst aus Fig. 1 hervorgeht, umfasst das erfindungsgemäße Verfahren in seiner bevorzugten Ausführung sechs Verfahrensstufen, von denen es sich bei der ersten Verfahrensstufe AI "Imprägnierung", der zweiten Verfahrensstufe AII "Deckstrich", der vierten Verfahrensstufe AIII "Lackauftrag" und der fünften Verfahrensstufe AIV "Unterstrich" um technologische Operationen handelt, in denen in oder auf das als Ausgangsmaterial eingesetzte Papier 1, insbesondere ein Dekorpapier 1, welches bedruckt oder unbedruckt sein kann, Kunstharze bzw. deren Mischungen appliziert werden und die daher als Applikationsstufen AI, AII, AIII, AIV bezeichnet werden. Die fünfte Verfahrensstufe (Applikationsstufe IV) ist dabei als optional zu betrachten. Bei der dritten Verfahrensstufe BI und der sechsten Verfahrensstufe BII handelt es sich um technologische Operationen, in denen keine Kunstharze bzw. deren Mischungen appliziert werden, sondern diese chemisch und physikalisch, insbesondere durch Wärmeeinwirkung, modifiziert werden und die daher hier als Behandlungsstufen BI, BII bezeichnet werden.

Das Fließbild in Fig. 1 veranschaulicht in Verbindung mit Fig. 2, dass gemäß dem erfindungsgemäßen Verfahren zum Herstellen einer abriebfesten Folie 9, insbesondere einer erfindungsgemäßen Folie 9, die zur Herstellung von Laminat-Fußbodenmaterialien eingesetzt werden kann, in der ersten Applikationsstufe AI ein Dekorpapier 1 mit einer, ein erstes Kunstharz enthaltenden, nicht näher dargestellten Imprägnierung 2_{wet} versehen wird. In einer zweiten Applikationsstufe AII wird dann auf das feuchte Imprägnat 3_{wet} eine Schicht 4_{wet} aufgebracht, die ein zweites Kunstharz sowie partikelförmiges abriebminderndes Material enthält. Anschließend erfolgt eine Wärmebehandlung, welche die erste Behandlungsstufe BI zur teilweisen Aushärtung der Kunstharze und zur teilweisen Entfernung der Feuchte aus dem feuchten beschichteten Imprägnat 5_{wet} darstellt.

In der dritten Applikationsstufe AIII, die sich an die Wärmebehandlung als erste Behandlungsstufe BI anschließt, erfolgt danach auf das wärmebehandelte Produkt 5, in dem die applizierten Kunstharze in zwischengetrockneter und teilvernetzter Form vorliegen, die Auftragung einer, ein drittes Kunstharz enthaltenden Deckschicht 6_{wet} (in ungetrockneter Form nicht separat dargestellt). Nach der optional vorhandenen vierten Applikationsstufe AIV, in der zusätzlich eine, ein viertes Kunstharz enthaltenden Unterschicht 8_{wet} (ebenfalls in ungetrockneter Form nicht separat dargestellt) aufgetragen werden kann, erfolgt in einer abschließenden, zweiten Behandlungsstufe BII eine weitere Wärmebehandlung der so hergestellten, noch ungetrockneten Folie 9_{wet} zur vollständigen Aushärtung der Kunstharze und - bis auf einen tolerierbaren Restgehalt - vollständigen Entfernung der Feuchte. Die Folie 9 mit allen ihren Schichten Papier 1, Imprägnierung 2, partikelhaltiger Schicht 4, Deckschicht 6 und Unterschicht 8 liegt damit in ihrer in Fig. 2 dargestellten endgültigen Form vor. Mit dem Bezugszeichen 3 ist dabei das Imprägnat aus dem Papier 1 und der Imprägnierung 2, mit dem Bezugszeichen 5 das nach der vierten Verfahrensstufe AIII vorliegende Zwischenprodukt aus dem Imprägnat 3 und der partikelhaltigen Schicht 4 und mit dem Bezugszeichen 7 das Zwischenprodukt bezeichnet, welches aus dem nach der vierten Verfahrensstufe AIII vorliegenden Zwischenprodukt 5 nach Auftragung der Deckschicht 6 vorliegt. Wenn die fünfte Verfahrensstufe AIV entfällt, stellt dieses Zwischenprodukt 7 bereits die fertige Folie dar.

Zu den Verfahrensstufen im Einzelnen:
Bei dem in der ersten Applikationsstufe AI eingesetzten ersten Kunstharz handelt es sich um ein Aminoharz, welches ein in flüssiger Form vorliegendes Harnstoff-Formaldehyd-Oligomer ist. Außerdem kann mit Vorteil vorgesehen sein, dass dem Aminoharz vor dem Imprägnieren eine Polymerdispersion aus einem oder mehreren Acrylat- oder Methacrylat-, Vinylacetat-Homopolymerisat(en) und/oder Styrol-Acrylat-, Styrol-Methacrylat-, Polybutadien-Styrol-Co-Polymer(en), vorzugsweise in einer Menge von 5 bis 120 Masseteilen, besonders bevorzugt in einer Menge von 60 bis 100 Massenteilen, bezogen auf 100 Masseteile Aminoharz, zugemischt wird. Eine solche Polymerdispersion dient insbesondere zur Flexibilisierung des Tränkharzes.

Besonders bevorzugt kann eine wässrige, anionische Polymerdispersion eines acrylsäureesterhaltigen Copolymerisats als Polymerdispersion eingesetzt werden, die frei von Weichmachern und Lösemitteln ist und das behandelte Imprägnat 3_{wet} nicht nur flexibler, sondern auch höher adhäsiv für die in der nächsten Verfahrensstufe AII aufzutragende weitere Schicht 4_{wet} - insbesondere die nachfolgend beschriebene spezielle melaminhaltige Schicht 4_{wet}, macht, die sich dadurch besser applizieren lässt.

Dem Aminoharz wird vor dem Imprägnieren ein Härter zu Förderung der Vernetzung, und zwar Ammonium- oder Magnesiumchlorid, Paratoluolsulfonsäure oder ein chloridfreier Härter auf der Basis einer wässrigen, im Wesentlichen neutral reagierenden Lösung anorganischer Salze im pH-Bereich von 6,8 bis 7,4, sowie gegebenenfalls ein Netzmittel zugemischt.

Insbesondere kann dem in der ersten Applikationsstufe AI eingesetzten Kunstharz vor dem Auftrag ein Tränkhilfsmittel, vorzugsweise ein anionisches Tensid, wie Diethylenglykol oder ein Fettalkoholglykolether, zugemischt werden. Dadurch wird in dem Kunstharzsystem eine Absenkung der Oberflächenspannung herbei geführt, ohne dass es jedoch dabei zu einer nennenswerten Schaumentwicklung kommt. Die Penetrationszeit des Harzes in die Poren des Papiers wird dadurch abgekürzt und die Homogenität der Imprägnierung begünstigt. Der Anteil des Tränkhilfsmittels für das in der ersten Applikationsstufe AI eingesetzte Kunstharz kann dabei optimalerweise - bezogen auf den Feststoffgehalt des ersten Kunstharzes bzw. Kunstharzgemisches - im Bereich von etwa 0,1 Ma.-% bis 0,6 Ma.-%, vorzugsweise von etwa 0,3 Ma.-% bis 0,5 Ma.-%, liegen.

In der ersten Applikationsstufe AI wird das Dekorpapier 1 zunächst mit der, das erste Kunstharz enthaltenden Imprägnierung 2_{wet} gesättigt, wobei insbesondere das Kunstharz zunächst an die Rückseite des Dekorpapiers 1 angespült wird, dann das Kunstharz ohne weitere Auftragung in einer sogenannten Atemstrecke in das Dekorpapier 1 penetriert. Danach wird das Dekorpapier 1 in einer Tauchstrecke nochmals mit dem ersten Kunstharz beladen. Wie Fig. 1 zeigt, kann zur Realisierung dieser Verfahrensstufe ein übliches Imprägnierwerk eingesetzt werden, wobei die Menge des Harzes mittels Dosierwalzen geregelt wird.

Die Auftragsmenge für die Imprägnierung 2_{wet} sollte im Bereich von 10 bis 80 g/m², vorzugsweise im Bereich von 15 bis 35 g/m², liegen.

Das in der zweiten Applikationsstufe AII eingesetzte zweite Kunstharz ist ebenfalls ein Aminoharz, und zwar ein in flüssiger Form vorliegendes methyliertes Melamin-Formaldehyd-Oligomer. Die in Lackform vorliegende Kunstharzmischung kann dabei des Weiteren insbesondere 2-Butoxiethanol und nur sehr geringe Anteile (< 1 Ma.-%) an freiem Formaldehyd enthalten. In der fertigen Folie 7 bewirkt ein solches Lacksystem vorteilhafterweise eine hohe Chemikalienresistenz, eine gute Haftung auf den anderen Schichten und eine niedrige Formaldehydemission. Bei der Verarbeitung zeichnet sich das System durch einen guten Verlauf auf der zu beschichtenden Oberfläche aus.

Zu dem erfindungsgemäßen Verfahren ist dabei generell zu bemerken, dass in allen Applikationsstufen AI, AII, AIII, AIV eine jeweilige Viskosität, insbesondere eine für die Imprägnierung und/oder Auftragung notwendige oder optimale Viskosität, des ersten, zweiten, dritten und/oder vierten Kunstharzes vorteilhafterweise durch die Zumischung von Wasser eingestellt werden kann.

Bei dem in der zweiten Applikationsstufe AII eingesetzten partikelförmigen abriebmindernden Material kann es sich bevorzugt um Korund, Siliciumdioxid oder auch um Siliciumcarbid handeln.

Dieses Material kann insbesondere mit einer Korngrößenverteilung F 220 nach dem Standard der FEPA (Fédération Européene des Fabricants de Produits Abrasifs) für Schleifkörnungen zur Anwendung kommen. Der mittlere Wert der Korngröße liegt bei dieser Korngrößenverteilung im Bereich von etwa 59 µm. Es wäre jedoch auch möglich, die Körnungen F 180, F 230, F 240, F 280, F 320, F 360 und F 400 nach dem FEPA-Standard oder anderen Standards (JIS R 6001, ANSI) unterliegende vergleichbare Körnungen einzusetzen oder durch Mischen zweier dieser Körnungen eine bimodale Korngrößenverteilungskurve zu bilden, um eine höhere Packungsdichte der Körner zu erzielen.

Der Anteil des partikelförmigen abriebmindernden Materials und/oder die Auftragsmenge in der Schicht 4_{wet} kann dabei vorteilhafterweise in Abhängigkeit von einer zu erzielenden Abriebfestigkeit (Tabelle 1) der Folie 7, 9 eingestellt werden. Je höher die zu erzielende Abriebfestigkeit sein soll, desto größer muss der Anteil des partikelförmigen abriebmindernden Materials und/oder die Auftragsmenge in der Schicht 4_{wet} gewählt werden. Dieser Anteil des partikelförmigen abriebmindernden Materials kann - bezogen auf 100 Masseteile des zweiten Kunstharzes bzw. Kunstharzgemisches - im Bereich von 15 bis 80 Masseteilen, vorzugsweise im Bereich von 30 bis 60 Masseteilen, liegen.

In der zweiten Applikationsstufe AII, die - wie bereits erwähnt - auch als Deckstrich bezeichnet werden kann, kann der Auftrag der Schicht 4_{wet} mittels einer Düse auf die Oberseite des feuchten Imprägnats 3_{wet} erfolgen, wobei die Auftragsmenge - vorzugsweise im Bereich von 20 bis 80 g/m² liegend - mit Hilfe von Dosierwalzen geregelt wird. Hierbei kann mit Vorteil die eingangs beschriebene, unter dem Namen ARP-Düse bekannte Vorrichtung zum Einsatz kommen.

Zur Förderung der Vernetzung wird dem in der zweiten Applikationsstufe AII eingesetzten Kunstharz wiederum vor dem Auftrag ein Härter auf der Basis organischer Säuren zugemischt. Für diese Säurehärtung (SH) kann beispielsweise ein Gemisch aus p-Toluolsulfonsäure, die Schwefelsäure in einem Anteil bis zu maximal 5 % enthalten kann, 2-Butoxiethanol und Ammoniaklösung zum Einsatz kommen. Der Anteil des Härters liegt dabei - bezogen auf 100 Masseteile des zweiten Kunstharzes - im Bereich von 10 bis 35 Masseteilen, vorzugsweise im Bereich von 20 bis 30 Masseteilen.

Anschließend erfolgt in der dritten Verfahrensstufe, welche die erste Behandlungsstufe BI darstellt, die Wärmebehandlung. Diese dient zur teilweisen Aushärtung der Kunstharze (erstes und zweites Kunstharz) und zur teilweisen Entfernung der Feuchte aus dem feuchten beschichteten Imprägnat 5_{wet}. Dazu kann im Sinne einer schonenden Behandlung, jedoch effizienten und präzisen Arbeitsweise ein kontinuierlich arbeitender Konvektions-Bandtrockner, insbesondere ein Schwebelufttrockner mit einer Zeit-, Temperatur- und Umluftsteuerung, eingesetzt werden.

Durch den Einsatz der vorstehend beschriebenen Härter verkürzt sich dabei die notwendige Behandlungszeit in dem Trockner. Sie kann bei einer Temperatur im Bereich von 90 °C bis 130 °C, insbesondere im Bereich von 100 °C bis 120 °C, kleiner als zwei, vorzugsweise kleiner als eine Minute sein. Entsprechend hoch kann unter Berücksichtigung der Länge der Trockenstrecke die Band- bzw. Durchlaufgeschwindigkeit durch den Trockner eingestellt werden.

Bei dem in der dritten Applikationsstufe AIII eingesetzten dritten Kunstharz handelt es sich um ein ähnliches Aminoharz wie in der zweiten Applikationsstufe AII, also um ein in flüssiger Form vorliegendes methyliertes Melamin-Formaldehyd-Oligomer. Dieses kann jedoch zur Erzielung einer besonderen Oberflächengüte, insbesondere eines gewünschten Glanzgrades modifiziert werden. Auch ein Härter wird hinsichtlich seiner Zusammensetzung und seines Anteils in Analogie zur zweiten Applikationsstufe AII eingesetzt.

In der dritten Applikationsstufe AIII kann dem Kunstharz bevorzugt auch ein Benetzungsmittel zugesetzt werden, welches auch das Verlaufen des Harzes auf der zu beschichtenden Oberfläche fördert. Das Benetzungsmittel wirkt dabei insbesondere sowohl auf die Oberflächenglätte als auch auf die Oberflächenspannung. Als ein solches Benetzungsmittel kann für das beschriebene Kunstharz mit Vorteil Dipropylenglykolmethylether eingesetzt werden, der auch die Porenausbildung reduzieren kann. Die entsprechende Einsatzmenge kann dabei - bezogen auf das Kunstharz bis zu etwa 1 Ma.-% betragen, kann aber auch kleiner sein als 0,5 Ma.-% und insbesondere bei 0,1 bis 0,2 Ma.-%, liegen.

In der dritten Applikationsstufe AIII, die - wie in Fig. 1 gezeigt und bereits erwähnt - auch kurz als Lackauftrag bezeichnet werden kann, kann die Schicht 6_{wet} des Kunstharzes mittels einer Rasterwalze auf die Oberseite der vorgetrockneten partikelhaltigen Schicht 4 erfolgen, wobei die Auftragsmenge, welche im Bereich von 5 bis 30 g/m², insbesondere im Bereich von 15 bis 25 g/m², liegen kann, durch eine Näpfchengröße, durch eine Laufgeschwindigkeit der Rasterwalze und/oder durch den Feststoffgehalt des Kunstharzes eingestellt werden. Hierzu ist auch zu bemerken, dass die angegebenen Grammaturen der Schichten sich jeweils auf den Trockenzustand beziehen, wobei davon ausgegangen wird, dass in diesem Trockenzustand noch eine Restfeuchte von 2 bis 4 % vorliegen kann.

Wenn gewünscht, kann in einer fünften Verfahrensstufe, die in Fig. 1 als Applikationsstufe IV bezeichnet ist, ein sogenannter Unterstrich erfolgen. Auch hier kann die Schicht 8_{wet} des fünften Kunstharzes mittels einer Rasterwalze - jedoch auf die vorgetrocknete Unterseite 2 der beschichteten und lackierten Imprägnats 7_{wet} - erfolgen, wobei wiederum die Auftragsmenge - vorzugsweise mit einer Grammatur im Bereich von 1 bis 20 g/m² - durch die Näpfchengröße, durch die Laufgeschwindigkeit der Rasterwalze und durch den Feststoffgehalt des Kunstharzes eingestellt werden kann. Als fünftes Kunstharz kann dabei mit Vorteil eine Polymerdispersion, wie sie für die erste Applikationsstufe als Kunstharz-Mischungsbestandteil beschrieben wurde, bevorzugt eine wässrige, anionische Polymerdispersion eines acrylsäureesterhaltigen Copolymerisats, eingesetzt werden. Auch dem vierten Kunstharz kann bevorzugt ein Netzmittel beigemischt werden. Die durch den Unterstrich in der Unterschicht 8 der Finishfolie 9 gegenüber der Imprägnierschicht 2 erhöhte Adhäsivität begünstigt bei einer späteren Weiterverarbeitung der Folie 9 eine bessere Klebefähigkeit eines aufgetragenen Klebstoffs.

Für die sich an die vierte oder an die fünfte Verfahrensstufe in der zweiten Behandlungsstufe BII anschließende Wärmebehandlung kann wiederum - wie in der ersten Behandlungsstufe BI - ein kontinuierlich arbeitender Konvektions-Bandtrockner mit Zeit-, Temperatur- und Umluftsteuerung, eingesetzt werden. Dabei kann erreicht werden, dass eine Behandlungszeit in der zweiten Behandlungsstufe BII bei einer Temperatur im Bereich von 100 °C bis 205 °C, insbesondere im Bereich von 170 °C bis 195 °C, kleiner ist als 60, vorzugsweise kleiner ist als 30 Sekunden. Diese weitere Wärmebehandlung führt zur vollständigen Aushärtung aller eingesetzten Kunstharze und Entfernung der Feuchte.

Die fertige Folie bzw. abriebfeste Folie 7, 9 kann abschließend noch in der Fertigungslinie aufgerollt und in dieser Rollenform transportiert und ausgeliefert werden.

Wie schon aus den vorstehenden Ausführungen hervorgeht, ist die vorliegende Erfindung nicht auf das dargestellte Ausführungsbeispiel beschränkt, sondern umfasst alle in den Ansprüchen definierten Mittel und Maßnahmen. Auch fällt es beispielsweise in den Rahmen der Erfindung, wenn das jeweilige Behandlungsprodukt nach der ersten Behandlungsstufe BI und/oder der zweiten Behandlungsstufe BII im Anschluss an die Wärmebehandlung gekühlt wird.

Der Begriff "Dekorpapier" für das in der ersten Applikationsstufe AI eingesetzte Dekorpapier 1 ist hinsichtlich seiner möglichen Grammatur weit auszulegen. So kann diese im Bereich von 15 bis 100 g/m² liegen, und auch für von diesem Wert abweichende spezifische Flächengewichte erscheint eine prinzipielle Eignung des erfindungsgemäßen Verfahrens gegeben. Unter diesem Aspekt ist für die Beharzung bei der Imprägnierung zu erwähnen, dass die spezifischen Flächengewichte des aufgetragenen Kunstharzes im vorstehend angegebenen Bereich bezogen auf die genannte anfängliche Grammatur des Dekorpapiers 1 vorzugsweise etwa bei 50 bis 70 % liegen sollten.

In dem erfindungsgemäßen Verfahren können - wie dies auch aus Fig. 1 hervorgeht - die vierte Verfahrensstufe AIII und die fünfte Verfahrensstufe AIV gleichzeitig oder geringfügig zeitversetzt in einer einzigen apparativen Einheit, wie einem Mitteltränkwerk realisiert werden. Die als Auftragselemente dienenden Rasterwalzen können darin jeweils entsprechend ihrer Funktion als obere und als untere Rasterwalze angeordnet sein.

### Bezugszeichen

- 1: Papier (Dekorpapier)
- 2: Imprägnierschicht
- 2_{wet}: Imprägnierschicht, ungetrocknet
- 3: Imprägnat aus 1 und 2
- 3_{wet}: Imprägnat, ungetrocknet
- 4: partikelhaltige Schicht
- 4_{wet}: partikelhaltige Schicht, ungetrocknet
- 5: Zwischenprodukt aus 3 und 4
- 5_{wet}: Zwischenprodukt aus 3_{wet} und 4_{wet}
- 6: Deckschicht
- 6_{wet}: Deckschicht, ungetrocknet
- 7: Zwischenprodukt aus 5 und 6
- 7_{wet}: Zwischenprodukt aus 5 und 6_{wet}
- 8: Unterschicht
- 8_{wet}: Unterschicht, ungetrocknet
- 9: Folie (Finishfolie)
- 9_{wet}: Folie (Finishfolie), ungetrocknet

- AI: Applikationsstufe I
- AII: Applikationsstufe II
- AIII: Applikationsstufe III
- AIV: Applikationsstufe IV
- BI: Behandlungsstufe I
- BII: Behandlungsstufe II

## Patentansprüche

1. Verfahren zum Herstellen einer abriebfesten Folie (7, 9), insbesondere zur Herstellung von Laminat-Fußbodenmaterialien oder abriebfesten Möbeloberflächen, wobei in einer ersten Applikationsstufe (AI) ein Dekorpapier (1) mit einer, ein Aminoharz als ein erstes Kunstharz enthaltenden Imprägnierung (2) versehen wird, wobei in einer zweiten Applikationsstufe (AII) auf das feuchte Imprägnat (3_{wet}) eine Schicht (4_{wet}) aufgebracht wird, die ein Aminoharz als zweites Kunstharz und partikelförmiges abriebminderndes Material enthält, und wobei anschließend eine Wärmebehandlung erfolgt, welche eine Behandlungsstufe (BI) zur teilweisen Aushärtung der Kunstharze und zur teilweisen Entfernung der Feuchte aus dem feuchten beschichteten Imprägnat (5_{wet}) darstellt, wobei in einer dritten Applikationsstufe (AIII), die sich an die, als eine erste Behandlungsstufe (BI) ablaufende Wärmebehandlung anschließt, die Auftragung einer, ein Aminoharz als drittes Kunstharz enthaltenden Deckschicht (6_{wet}) erfolgt, und dass in einer abschließenden, zweiten Behandlungsstufe (BII) eine weitere Wärmebehandlung zur vollständigen Aushärtung der Kunstharze und Entfernung der Feuchte erfolgt,
**dadurch gekennzeichnet, dass** das in der ersten Applikationsstufe (AI) eingesetzte erste Kunstharz ein in flüssiger Form vorliegendes Harnstoff-Formaldehyd-Oligomer ist, dem vor dem Imprägnieren ein Härter zur Förderung der Vernetzung, und zwar Ammonium- oder Magnesiumchlorid, Paratoluolsulfonsäure oder ein chloridfreier Härter auf der Basis einer wässrigen Lösung anorganischer Salze im pH-Bereich von 6,8 bis 7,4, zugemischt wird, wobei das in der zweiten Applikationsstufe (AII) eingesetzte zweite Kunstharz und/oder das in der dritten Applikationsstufe (AIII) eingesetzte dritte Kunstharz ein in flüssiger Form vorliegendes methyliertes Melamin-Formaldehyd-Oligomer ist, welchem vor dem Auftrag ein Härter auf der Basis organischer Säuren zugemischt wird, dessen Anteil - bezogen auf 100 Masseteile des Kunstharzes - im Bereich von 10 bis 35 Masseteilen liegt.

2. Verfahren nach Anspruch 1,
**dadurch gekennzeichnet, dass** dem in der ersten Applikationsstufe (AI) eingesetzten Kunstharz vor dem Imprägnieren eine Polymerdispersion aus einem oder mehreren Acrylat oder Methacrylat-, Vinylacetat-Homopolymerisat (en) und/oder Styrol-Acrylat-, Styrol-Methacrylat-, Polybutadien-Styrol-Co-Polymer(en), vorzugsweise in einer Menge von 5 bis 120 Masseteilen, besonders bevorzugt in einer Menge von 60 bis 100 Masseteilen, bezogen auf 100 Masseteile Aminoharz, zugemischt wird.

3. Verfahren nach Anspruch 1 oder 2,
**dadurch gekennzeichnet, dass** dem in der ersten Applikationsstufe (AI) eingesetzten Kunstharz vor dem Auftrag ein Tränkhilfsmittel, insbesondere ein anionisches Tensid, wie Diethylenglykol oder ein Fettalkoholglykolether, zugemischt wird.

4. Verfahren nach Anspruch 3,
**dadurch gekennzeichnet, dass** der Anteil des Tränkhiffsmittels für das in der ersten Applikationsstufe (AI) eingesetzte Kunstharz - bezogen auf den Feststoffgehalt des ersten Kunstharzes bzw. Kunstharzgemisches - im Bereich von etwa 0,1 Ma.-% bis 0,6 Ma.%, vorzugsweise von etwa 0,3 Ma.-% bis 0,5 Ma.-%, liegt.

5. Verfahren nach einem der Ansprüche 1 bis 4,
**dadurch gekennzeichnet, dass** eine jeweilige Viskosität, insbesondere eine für die Imprägnierung und/oder Auftragung notwendige oder optimale Viskosität, des ersten, zweiten, dritten und/oder vierten Kunstharzes durch die Zumischung von Wasser eingestellt wird.

6. Verfahren nach einem der Ansprüche 1 bis 5,
**dadurch gekennzeichnet, dass** in der ersten Applikationsstufe (AI) das Dekorpapier (1) mit der, das erste Kunstharz enthaltenden Imprägnierung (2_{wet}) gesättigt wird, wobei insbesondere das Kunstharz zunächst an die Rückseite des Dekorpapiers (1) angespült wird, dann das Kunstharzohne weitere Auftragung in das Dekorpapier (1) penetriert, und schließlich das Dekorpapier (1) in einer Tauchstrecke nochmals mit dem ersten Kunstharz beladen wird.

7. Verfahren nach einem der Ansprüche 1 bis 6,
**dadurch gekennzeichnet, dass** in der ersten Applikationsstufe (AI) eine Auftragsmenge zur Herstellung der, das erste Kunstharz enthaltenden Imprägnierung (2) mit Hilfe von Dosierwalzen geregelt wird.

8. Verfahren nach einem der Ansprüche 1 bis 7,
**dadurch gekennzeichnet, dass** das in der zweiten Applikationsstufe (AII) eingesetzte partikelförmige abriebmindernde Material Korund, Siliciumdioxid oder Siliciumkarbid, insbesondere mit einer Korngrößenverteilung F 220 nach FEPA Standard, ist.

9. Verfahren nach einem der Ansprüche 1 bis 8,
**dadurch gekennzeichnet, dass** in der zweiten Applikationsstufe (AII) der Auftrag der Schicht (4_{wet}) mittels einer Düse auf die Oberseite des feuchten Imprägnats (3_{wet}) erfolgt und die Auftragsmenge mit Hilfe von Dosierwalzen geregelt wird.

10. Verfahren nach einem der Ansprüche 1 bis 9,
**dadurch gekennzeichnet, dass** in der zweiten Applikationsstufe (AII) der Anteil des partikelförmigen abriebmindernden Materials und/oder die Auftragsmenge in der Schicht (4_{wet}) in Abhangigkeit von einer zu erzielenden Abriebfestigkeit der Folie (7, 9) eingestellt wird.

11. Verfahren nach einem der Ansprüche 1 bis 10,
**dadurch gekennzeichnet, dass** der Anteil des partikelförmigen abriebmindemden Materials - bezogen auf 100 Masseteile des zweiten Kunstharzes - im Bereich von 15 bis 80 Masseteilen, vorzugsweise im Bereich von 30 bis 60 Masseteilen, liegt.

12. Verfahren nach einem der Ansprüche 1 bis 11,
**dadurch gekennzeichnet, dass** die Auftragsmenge in der Schicht (4_{wet}), die in der zweiten Applikationsstufe (AII) aufgebracht wird, im Bereich von 20 bis 80 g/m² liegt.

13. Verfahren nach einem der Ansprüche 1 bis 12,
**dadurch gekennzeichnet, dass** der Anteil des Härters des in der zweiten Applikationsstufe (AII) und/oder in der dritten Applikationsstufe (AIII) eingesetzten Kunstharzes jeweils bezogen auf 100 Masseteile des Kunstharzes im Bereich von 20 bis 30 Masseteilen, liegt.

14. Verfahren nach einem der Ansprüche 1 bis 13,
**dadurch gekennzeichnet, dass** für die in der ersten Behandlungsstufe (BI) und in der zweiten Behandlungsstufe (BII) ablaufenden Wärmebehandlungen jeweils ein kontinuierlich arbeitender Konvektions-Bandtrockner, insbesondere ein Schwebelufttrockner mit einer Zeit-, Temperatur- und Umluftsteuerung, eingesetzt wird.

15. Verfahren nach einem der Ansprüche 1 bis 14,
**dadurch gekennzeichnet, dass** eine Behandlungszeit in der ersten Behandlungsstufe (B1) bei einer Temperatur im Bereich von 90 °C bis 130 °C, insbesondere im Bereich von 100 °C bis 120 °C, kleiner ist als zwei, vorzugsweise kleiner ist als eine Minute.

16. Verfahren nach einem der Ansprüche 1 bis 15,
**dadurch gekennzeichnet, dass** dem in der dritten Applikationsstufe (AIII) eingesetzten Kunstharz vor dem Auftrag ein Benetzungsmittel, insbesondere Dipropylenglykolmethylether, zugemischt wird.

17. Verfahren nach Anspruch 16,
**dadurch gekenntzeichnet,** dass der Anteil des Netzmittels für das in der dritten Applikationsstufe (AIII) eingesetzte Kunstharz - bezogen auf die Menge des Kunstharzes - weniger als 1,0 Ma.%, vorzugsweise weniger als 0,5 Ma. %, besonders bevorzugt 0,1 bis 0,2 Ma.%, beträgt.

18. Verfahren nach einem der Ansprüche 1 bis 17,
**dadurch gekennzeichnet, dass** in der dritten Applikationsstufe (AIII) die Schicht (6_{wet}) des dritten Kunstharzes mittels einer Rasterwalze, insbesondere mittels einer in einem Mitteltränkwerk angeordneten oberen Rasterwalze, auf die Oberseite der vorgetrockneten partikelhaltigen Schicht (4) aufgetragen wird.

19. Verfahren nach einem der Ansprüche 1 bis 18,
**dadurch gekennzeichnet, dass** in der vierten Applikationsstufe (AIV) die Schicht (8_{wet}) des vierten Kunstharzes mittels einer Rasterwalze, insbesondere mittels einer in einem Mitteltränkwerk angeordneten unteren Rasterwalze, vorzugsweise mit einer Grammatur im Bereich von 1 bis 20 g/m², auf die Unterseite der vorgetrockneten Imprägnierung (2) aufgetragen wird.

20. Verfahren nach Anspruch 18 oder 19,
**dadurch gekennzeichnet, dass** die durch die Rasterwalze(n) applizierte Auftragsmenge des dritten und/oder vierten Kunstharzes durch eine Näpfchengröße, eine Laufgeschwindigkeit der Rasterwalze und/oder durch den Feststoffgehalt des Kunstharzes eingestellt wird.

21. Verfahren nach einem der Ansprüche 1 bis 20,
**dadurch gekennzeichnet, dass** die Auftragsmenge in der Schicht (6_{wet}), die in der dritten Applikationsstufe (AIII) aufgebracht wird, im Bereich von 5 bis 30 g/m², insbesondere im Bereich von 15 bis 25 g/m², liegt

22. Verfahren nach einem der Ansprüche 1 bis 21,
**dadurch gekennzeichnet, dass** das in der vierten Applikationsstufe (AIV) eingesetzte Kunstharz eine Polymerdispersion aus einem oder mehreren Acrylat- oder Methacrylat-, Vinylacetat-Homopolymerisat(en) und/oder Styrol-Acrylat-, Styrol-Methacrylat-, Polybutadien-Styrol-Co-Polymer(en), vorzugsweise eine wässrige, anionische Polymerdispersion eines acrylsäureesterhaltigen Copolymerisats, ist.

23. Verfahren nach einem der Ansprüche 1 bis 22,
**dadurch gekennzeichnet, dass** dem in der vierten Applikationsstufe (AIV) eingesetzten Kunstharz vor dem Auftrag ein Härter zur Förderung der Vernetzung, insbesondere Ammonium- oder Magnesiumchlorid, Paratoluolsulfonsäure oder bevorzugt ein chloridfreier Härter auf der Basis einer wässrigen Lösung anorganischer Salze im neutralen pH-Bereich zugemischt wird.

24. Verfahren nach einem der Ansprüche 1 bis 23,
**dadurch gekennzeichnet, dass** eine Behandlungszeit in der zweiten Behandlungsstufe (BII) bei einer Temperatur im Bereich von 100 °C bis 205 °C, insbesondere im Bereich von 170 °C bis 195 °C, kleiner ist als 60, vorzugsweise kleiner ist als 30 Sekunden.

25. Abriebfeste Folie (7, 9), bestehend aus einem Papier (1), insbesondere aus einem Dekorpapier (1), und aus einer darauf abgeschiedenen, aus einem Aminoharz bestehenden Deckschicht (6), wobei das Papier (1) mit einer, ein erstes Aminoharz enthaltenden Imprägnierung (2) versehen ist, wobei auf dem Imprägnat (3) unter der Deckschicht (6) eine Schicht (4) liegt, die ein zweites Aminoharz und partikelförmiges abriebminderndes Material enthält, und wobei die Deckschicht (6) aus einem dritten Aminoharz gebildet ist,
**dadurch gekennzeichnet, dass** das erste Aminoharz aus einem Harnstoff-Formaldehyd-Oligomer gebildet ist, dem vor dem Imprägnieren ein Härter zur Förderung der Vernetzung, und zwar Ammonium- oder Magnesiumchlorid, Paratoluolsulfonsäure oder ein chloridfreier Härter auf der Basis einer wässrigen Lösung anorganischer Salze im pH-Bereich von 6,8 bis 7,4 zugemischt wird, und das zweite Aminoharz und/oder das dritte Aminoharz ein säuregehärtetes methyliertes Melamin-Formaldehyd-Oligomer ist, welchem vor dem Auftrag ein Härter auf der Basis organischer Säuren zugemischt ist, dessen Anteil - bezogen auf 100 Masseteile des Kunstharzes - im Bereich von 10 bis 35 Masseteilen liegt, wobei die Imprägnierung (2) und die darüber liegenden Schichten (4, 6) für eine nachträgliche Klebeverbindung der Folie als Finishfolie (7, 9) für einen Träger ausgehärtet sind.

## Claims

1. A method for the production of an abrasion-resistant film (7, 9), in particular for the production of laminate floor materials or abrasion-resistant furniture surfaces, wherein in a first application stage (AI) a decorative paper (1) is provided with an impregnation (2) containing an amino resin as a first synthetic resin, wherein in a second application stage (AII) a layer (4_{wet}) which contains an amino resin as a second synthetic resin and particulate, abrasion-reducing material is applied on to the moist impregnate (3_{wet}), and wherein a heat treatment then takes place which represents a treatment stage (BI) for the partial curing of the synthetic resins and for the partial removal of the moisture from the moist coated impregnate (5_{wet}), wherein in a third application stage (AIII), which follows the heat treatment taking place as a first treatment stage (BI), the application of a cover layer (6_{wet}) containing an amino resin as a third synthetic resin takes place, and that in a final, second treatment stage (BII) a further heat treatment takes place for the complete curing of the synthetic resins and removal of the moisture,
**characterised in that** the first synthetic resin which is used in the first application stage (AI) is a urea-formaldehyde oligomer present in liquid form into which a curing agent for promoting crosslinking, in particular ammonium or magnesium chloride, para-toluenesulfonic acid or a chloride-free curing agent based on an aqueous solution of inorganic salts in the pH range of 6.8 to 7.4, is mixed before the impregnation, wherein the second synthetic resin which is used in the second application stage (AII) and/or the third synthetic resin which is used in the third application stage (AIII) is a methylated melamine-formaldehyde oligomer present in liquid form, into which a curing agent based on organic acids is mixed before the application, the proportion of which - based on 100 parts by mass of the synthetic resin - is in the range of 10 to 35 parts by mass.

2. The method according to claim 1,
**characterised in that** a polymer dispersion comprising one or more acrylate or methacrylate homopolymer(s), vinyl acetate homopolymer(s) and/or styrene-acrylate copolymer(s), styrene-methacrylate copolymer(s), polybutadiene-styrene copolymer(s), preferably in a quantity of 5 to 120 parts by mass, particularly preferably in a quantity of 60 to 100 parts by mass, based on 100 parts by mass of amino resin, is mixed into the synthetic resin which is used in the first application stage (AI) before the impregnation.

3. The method according to claim 1 or 2,
**characterised in that** an impregnating auxiliary agent, in particular an anionic surfactant, such as diethylene glycol or a fatty alcohol glycol ether, is mixed into the synthetic resin which is used in the first application stage (AI) before the application

4. The method according to claim 3,
**characterised in that** the proportion of the impregnating auxiliary agent for the synthetic resin which is used in the first application stage (AI) - based on the solids content of the first synthetic resin or synthetic resin mixture - is in the range of about 0.1% by mass to 0.6% by mass, preferably from about 0.3% by mass to 0.5% by mass.

5. The method according to one of claims 1 to 4,
**characterised in that** a respective viscosity, in particular a viscosity which is necessary or optimum for the impregnation and/or application, of the first, second, third and/or fourth synthetic resin is established by admixing water.

6. The method according to one of claims 1 to 5,
**characterised in that,** in the first application stage (AI), the decorative paper (1) is saturated with the impregnation (2_{wet}) containing the first synthetic resin, wherein in particular the synthetic resin is first washed on to the back of the decorative paper (1), the synthetic resin then penetrates into the decorative paper (1) without further application and finally the decorative paper (1) is loaded again with the first synthetic resin in an immersion zone.

7. The method according to one of claims 1 to 6,
**characterised in that,** in the first application stage (AI), an applied quantity for the production of the impregnation (2) containing the first synthetic resin is regulated with the aid of metering rollers.

8. The method according to one of claims 1 to 7,
**characterised in that** the particulate abrasion-reducing material which is used in the second application stage (AII) is corundum, silicon dioxide or silicon carbide, in particular having a particle size distribution F 220 according to FEPA standard.

9. The method according to one of claims 1 to 8,
**characterised in that,** in the second application stage (AII), the application of the layer (4_{wet}) takes place by means of a nozzle on to the upper surface of the moist impregnate (3_{wet}) and the quantity applied is regulated with the aid of metering rollers.

10. The method according to one of claims 1 to 9,
**characterised in that,** in the second application stage (AII), the proportion of the particulate abrasion-reducing material and/or the applied quantity in the layer (4_{wet}) is adjusted as a function of an abrasion resistance of the film (7, 9) which is to be achieved.

11. The method according to one of claims 1 to 10,
**characterised in that** the proportion of the particulate abrasion-reducing material - based on 100 parts by mass of the second synthetic resin - is in the range of 15 to 80 parts by mass, preferably in the range of 30 to 60 parts by mass.

12. The method according to one of claims 1 to 11,
**characterised in that** the applied quantity in the layer (4_{wet}) which is applied in the second application stage (AII) is in the range of 20 to 80 g/m².

13. The method according to one of claims 1 to 12,
**characterised in that** the proportion of the curing agent of the synthetic resin which is used in the second application stage (AII) and/or in the third application stage (AIII), based in each case on 100 parts by mass of the synthetic resin, is in the range of 20 to 30 parts by mass.

14. The method according to one of claims 1 to 13,
**characterised in that** in each case a continuously operating convection belt dryer, in particular a lay-on-air dryer having time, temperature and air circulation control, is used for the heat treatments taking place in the first treatment stage (BI) and in the second treatment stage (BII).

15. The method according to one of claims 1 to 14,
**characterised in that** a treatment time in the first treatment stage (BI) at a temperature in the range of 90°C to 130°C, in particular in the range of 100°C to 120°C, is less than two minutes, preferably less than one minute.

16. The method according to one of claims 1 to 15,
**characterised in that** a wetting agent, in particular dipropylene glycol methyl ether, is mixed into the synthetic resin which is used in the third application stage (AIII) before the application.

17. The method according to claim 16,
**characterised in that** the proportion of the wetting agent for the synthetic resin which is used in the third application stage (AIII) - based on the quantity of the synthetic resin - is less than 1.0% by mass, preferably less than 0.5% by mass, particularly preferably 0.1 to 0.2% by mass.

18. The method according to one of claims 1 to 17,
**characterised in that,** in the third application stage (AIII), the layer (6_{wet}) of the third synthetic resin is applied by means of an anilox roll, in particular by means of an upper anilox roll arranged in a medium impregnating unit, to the upper surface of the pre-dried particulate layer (4).

19. The method according to one of claims 1 to 18,
**characterised in that,** in the fourth application stage (AIV), the layer (8_{wet}) of the fourth synthetic resin is applied by means of an anilox roll, in particular by means of a lower anilox roll arranged in a medium impregnating unit, preferably with a grammage in the range of 1 to 20 g/m², to the lower surface of the pre-dried impregnation (2).

20. The method according to claim 18 or 19,
**characterised in that** the quantity of the third and/or fourth synthetic resin applied by the anilox roll(s) is established by a cell size, a running speed of the anilox roll and/or by the solids content of the synthetic resin.

21. The method according to one of claims 1 to 20,
**characterised in that** the quantity applied in the layer (6_{wet}) which is applied in the third application stage (AIII) is in the range of 5 to 30 g/m², in particular in the range of 15 to 25 g/m².

22. The method according to one of claims 1 to 21,
**characterised in that** the synthetic resin which is used in the fourth application stage (AIV) is a polymer dispersion comprising one or more acrylate or methacrylate homopolymer(s), vinyl acetate homopolymer(s) and/or styrene-acrylate copolymer(s), styrene-methacrylate copolymer(s), polybutadiene-styrene copolymer(s), preferably an aqueous, anionic polymer dispersion of an acrylate-containing copolymer.

23. The method according to one of claims 1 to 22,
**characterised in that** a curing agent for promoting crosslinking, in particular ammonium or magnesium chloride, para-toluenesulfonic acid or preferably a chloride-free curing agent based on an aqueous solution of inorganic salts in the neutral pH range, is mixed into the synthetic resin which is used in the fourth application stage (AIV) before the application.

24. The method according to one of claims 1 to 23,
**characterised in that** a treatment time in the second treatment stage (BII) at a temperature in the range of 100°C to 205°C, in particular in the range of 170°C to 195°C, is less than 60, preferably less than 30, seconds.

25. An abrasion-resistant film (7, 9), consisting of a paper (1), in particular of a decorative paper (1), and of a cover layer (6) deposited thereon and consisting of an amino resin, wherein the paper (1) is provided with an impregnation (2) containing a first amino resin, wherein a layer (4) which contains a second amino resin and particulate abrasion-reducing material is present on the impregnate (3) under the cover layer (6), and wherein the cover layer (6) is made of a third amino resin,
**characterised in that** the first amino resin is made of a urea-formaldehyde oligomer, into which a curing agent for promoting crosslinking, in particular ammonium or magnesium chloride, para-toluenesulfonic acid or a chloride-free curing agent based on an aqueous solution of inorganic salts in the pH range of 6.8 to 7.4, is mixed before the impregnation, and the second amino resin and/or the third amino resin is an acid-cured methylated melamine-formaldehyde oligomer into which a curing agent based on organic acids is mixed before the application, the proportion of which - based on 100 parts by mass of the synthetic resin - is in the range of 10 to 35 parts by mass, wherein the impregnation (2) and the layers (4, 6) present thereon are cured for subsequent adhesive bonding of the film as a finish film (7, 9) for a carrier.

## Revendications

1. Procédé de production d'une feuille résistant à l'usure (7, 9), en particulier, pour la production de matériaux de plancher stratifié ou de surfaces de meubles résistant à l'usure, dans lequel dans une première étape d'application (AI), un papier de décoration (1) est doté d'une imprégnation (2) contenant une résine amino en tant que première résine synthétique, dans lequel, dans une deuxième étape d'application (AII), une couche (4_{wet}) est appliquée sur l'imprégnation humide (3_{wet}) qui contient une résine amino en tant que deuxième résine synthétique et un matériau particulaire réduisant l'usure, et dans lequel on effectue ensuite un traitement thermique qui constitue une étape de traitement (BI) pour le durcissement partiel de la résine synthétique et pour l'élimination partielle de l'humidité de l'imprégnat revêtu à l'état humide (5_{wet}), dans lequel, dans une troisième étape d'application (AIII) qui s'adjoint au traitement thermique se déroulant en tant que première étape de traitement (BI), s'effectue l'application d'une couche de revêtement (6_{wet}) contenant une résine amino comme troisième résine synthétique, et dans une deuxième étape de traitement (BII) terminale, un autre traitement thermique s'effectue pour parfaire le durcissement de la résine synthétique et l'élimination de l'humidité,
**caractérisé en ce que** la première résine synthétique utilisée dans la première étape d'application (AI) est un oligomère d'urée-formaldéhyde se présentant sous forme liquide auquel on mélange avant l'imprégnation, un durcisseur pour favoriser la réticulation, à savoir du chlorure d'ammonium ou du chlorure de magnésium, de l'acide paratoluène-sulfonique ou un durcisseur sans chlorure à base d'une solution aqueuse de sel anorganique dans une plage de pH allant de 6,8 à 7,4, la deuxième résine synthétique utilisée dans la deuxième étape d'application (AII) et/ou la troisième résine synthétique utilisée dans la troisième étape d'application (AIII) est un oligomère de mélamine-formaldéhyde méthylé se présentant sous une forme liquide auquel avant l'application on ajoute un durcisseur à base d'acides organiques dont la proportion, par rapport à 100 parties en poids de la résine synthétique se situe dans une plage allant de 10 à 35 parties en poids.

2. Procédé selon la revendication 1,
**caractérisé en ce que** l'on mélange à la résine synthétique utilisée dans la première étape d'application (AI) avant l'imprégnation, une dispersion de polymère parmi un ou plusieurs homopolymère(s) d'acrylate ou de méthacrylate, d'acétate de vinyle et/ou co-polymère(s) de styrène-acrylate, de styrène-méthacrylate, de polybutadiène-styrène, de préférence, en une quantité de 5 à 120 parties en poids, de manière particulièrement préférée, de 60 à 100 parties en poids, par rapport à 100 parties en poids de résine amino.

3. Procédé selon la revendication 1 ou 2,
**caractérisé en ce que** l'on mélange à la résine synthétique utilisée dans la première étape d'application (AI) avant l'application, un auxiliaire d'imbibition, en particulier, un tensioactif anionique, tel que le diéthylène glycol ou un éther de glycol d'alcool gras.

4. Procédé selon la revendication 3,
**caractérisé en ce que** la proportion d'auxiliaire d'imbibition pour la résine synthétique utilisée dans la première étape d'application (AI), par rapport à la teneur en solide de la première résine synthétique ou du mélange de résines synthétiques, se situe dans une plage d'environ 0,1 % Ma à 0,6 % Ma, de préférence, d'environ 0,3 % Ma à 0,5 % Ma.

5. Procédé selon l'une des revendications 1 à 4,
**caractérisé en ce qu'**une viscosité respective, en particulier une viscosité nécessaire ou optimale pour l'imprégnation et/ou l'application de la première, deuxième, troisième et/ou quatrième résine synthétique est ajustée par mélange.

6. Procédé selon l'une des revendications 1 à 5,
**caractérisé en ce que**, dans la première étape d'application (AI), le papier de décor (1) est saturé avec l'imprégnation contenant la première résine synthétique (2_{wet}), en particulier, dans lequel la résine synthétique est tout d'abord rejetée sur le verso du papier de décor (1), la résine pénétrant ensuite sans autre application dans le papier de décor (1) et enfin, le papier de décor (1) est chargé encore une fois dans une piste d'immersion avec la première résine synthétique.

7. Procédé selon l'une des revendications 1 à 6,
**caractérisé en ce que**, dans la première étape d'application (AI), une quantité d'application est régulée pour produire l'imprégnation (2) contenant la première résine synthétique à l'aide de cylindres doseurs.

8. Procédé selon l'une des revendications 1 à 7,
**caractérisé en ce que**, le matériau particulaire réduisant l'usure, utilisé dans la deuxième étape d'application (AII) est du corindon, du dioxyde de silicium ou du carbure de silicium, en particulier, avec une répartition des tailles de grains F 220 selon la norme FEPA.

9. Procédé selon l'une des revendications 1 à 8,
**caractérisé en ce que**, dans la deuxième étape d'application (AII), l'application de la couche (4_{wet}) s'effectue au moyen d'une buse sur la surface supérieure de l'imprégnat humide (3_{wet}) et la quantité d'application est régulée à l'aide de cylindre doseurs.

10. Procédé selon l'une des revendications 1 à 9,
**caractérisé en ce que**, dans la deuxième étape d'application (AII), la proportion de matériau particulaire réduisant l'usure et/ou la quantité d'application dans la couche (4_{wet}) est ajustée en fonction d'une résistance à l'usure visée de la feuille (7, 9).

11. Procédé selon l'une des revendications 1 à 10,
**caractérisé en ce que** la proportion du matériau particulaire réduisant l'usure, par rapport à 100 parties en poids de la deuxième résine synthétique, se situe dans une plage allant de 15 à 80 parties en poids, de préférence dans une plage allant de 30 à 60 parties en poids.

12. Procédé selon l'une des revendications 1 à 11,
**caractérisé en ce que** la quantité d'application dans la couche (4_{wet}) qui est appliquée dans la deuxième étape d'application (AII) se situe dans la plage allant de 20 à 80 g/m².

13. Procédé selon l'une des revendications 1 à 12,
**caractérisé en ce que** la proportion de durcisseur de la résine synthétique utilisée dans la deuxième étape d'application (AII) et/ou dans la troisième étape d'application (AIII), respectivement, par rapport à 100 parties en poids de la résine synthétique, se situe dans la plage allant de 20 à 30 parties en poids.

14. Procédé selon l'une des revendications 1 à 13,
**caractérisé en ce que**, pour les traitements thermiques se déroulant dans la première étape de traitement (BI) et dans la deuxième étape de traitement (BII) respectivement, un séchoir à tapis roulant à convection fonctionnant en continu, en particulier un séchoir à colonne d'air chaud doté d'une commande de durée, de température et de circulation d'air ambiant, est utilisé.

15. Procédé selon l'une des revendications 1 à 14,
**caractérisé en ce qu'**une durée de traitement dans la première étape de traitement (BI) à une température comprise dans une plage allant de 90° C à 130° C, en particulier, dans une plage allant de 100° C à 120° C, est inférieure à deux minutes, de préférence, inférieure à une minute.

16. Procédé selon l'une des revendications 1 à 15,
**caractérisé en ce que**, avant l'application, on mélange à la résine synthétique utilisée dans la troisième étape d'application (AIII), un agent mouillant, en particulier, le dipropylèneglycol méthyléther.

17. Procédé selon la revendication 16,
**caractérisé en ce que** la proportion d'agent mouillant pour la résine synthétique utilisée dans la troisième étape d'application (AIII), par rapport à la quantité de résine synthétique, est inférieure à 1,0 % Ma, de préférence, inférieure à 0,5 % Ma, de manière particulièrement préférée, est de 0,1 à 0,2 % Ma.

18. Procédé selon l'une des revendications 1 à 17,
**caractérisé en ce que**, dans la troisième étape d'application (AIII), la couche (6_{wet}) de la troisième résine synthétique est appliquée au moyen d'un rouleau distributeur, en particulier au moyen d'un rouleau distributeur supérieur disposé dans un dispositif d'imprégnation, sur la partie supérieure de la couche pré-séchée (4) contenant des particules.

19. Procédé selon l'une des revendications 1 à 18,
**caractérisé en ce que**, dans la quatrième étape d'application (AIV), la couche (8_{wet}) de la quatrième résine synthétique est appliquée au moyen d'un rouleau distributeur, en particulier au moyen d'un rouleau distributeur inférieur disposé dans un dispositif d'imprégnation, de préférence, avec un grammage compris dans une plage allant de 1 à 20 g/m², sur la partie inférieure de l'imprégnation pré-séchée (2).

20. Procédé selon la revendication 18 ou 19,
**caractérisé en ce que** la quantité d'application appliquée par le/les rouleau(x) distributeur(s) de la troisième et/ou de la quatrième résine synthétique est ajustée par une taille d'alvéole, une vitesse de fonctionnement du rouleau distributeur et/ou par la teneur en solide de la résine synthétique.

21. Procédé selon l'une des revendications 1 à 20,
**caractérisé en ce que** la quantité d'application dans la couche (6_{wet}) qui est appliquée dans la troisième étape d'application (AIII) se situe dans une plage allant de 5 à 30 g/m², en particulier, dans une plage allant de 15 à 25 g/m².

22. Procédé selon l'une des revendications 1 à 21,
**caractérisé en ce que**, dans la résine synthétique utilisée dans la quatrième étape d'application (AIV), une dispersion de polymère est constituée d'un ou plusieurs homopolymère(s) d'acrylate ou de méthacrylate, d'acétate de vinyle et/ou co-polymère(s) de styrène-acrylate, de styrène-méthacrylate, de polybutadiène-styrène, de préférence, une dispersion de polymère aqueuse anionique d'un copolymère contenant un ester d'acide acrylique.

23. Procédé selon l'une des revendications 1 à 22,
**caractérisé en ce que**, avant l'application, on mélange à la résine synthétique utilisée dans la quatrième étape d'application (AIV), un durcisseur pour favoriser la réticulation, en particulier, le chlorure d'ammonium ou de magnésium, l'acide paratoluène-sulfonique ou de préférence, un durcisseur sans chlorure à base d'une solution aqueuse de sel anorganique dans une plage de pH neutre.

24. Procédé selon l'une des revendications 1 à 23,
**caractérisé en ce qu'**un temps de traitement dans la deuxième étape de traitement (BII) à une température comprise dans une plage allant de 100° C à 205° C, en particulier dans une plage allant de 170° C à 195° C est inférieur à 60 secondes, de préférence, inférieur à 30 secondes.

25. Feuille résistant à l'usure (7, 9), constituée d'un papier (1), en particulier, d'un papier de décor (1) et d'une couche de revêtement (6) déposée sur celui-ci, constituée d'une résine amino, le papier (1) étant doté d'une imprégnation (2) contenant une première résine amino, dans laquelle sur l'imprégnat (3) sous la couche de revêtement (6) se trouve une couche (4) qui contient une deuxième résine amino et un matériau particulaire résistant à l'usure, et dans laquelle la couche de revêtement (6) est formée d'une troisième résine amino,
**caractérisée en ce que**, la première résine amino est formée d'un oligomère d'urée-formaldéhyde auquel on mélange, avant l'imprégnation, un durcisseur pour favoriser la réticulation, à savoir du chlorure d'ammonium ou du chlorure de magnésium, de l'acide paratoluène-sulfonique ou un durcisseur sans chlorure à base d'une solution aqueuse de sel anorganique dans une plage de pH allant de 6,8 à 7,4, et la deuxième résine amino et/ou la troisième résine amino est un oligomère de mélamine-formaldéhyde méthylé durci par un acide, auquel avant l'application on ajoute un durcisseur à base d'acides organiques et dont la proportion par rapport à 100 parties en poids de la résine synthétique se situe dans une plage allant de 10 à 35 parties en poids, l'imprégnation (2) et les couches superposées sur celle-ci (4, 6) étant durcies pour une liaison adhésive consécutive de la feuille en tant que feuille finie (7, 9) pour un support.
